# FASCICULE DE BREVET EUROPEEN

(11) **EP 0 659 467 B1**
(45) Date de publication et mention de la délivrance du brevet: **07.10.1998**
(21) Numéro de dépôt: 94203663.3
(22) Date de dépôt: 16.12.1994
(51) Int. Cl.: B01D 61/44, C01D 1/38, C25B 1/16

(54) **Procédé de fabrication d'hydroxyde de métal alcalin**
Verfahren zur Herstellung von Alkalimetall-Hydroxiden
Process for the production of alkali metal hydroxides

(30) Priorité: 24.12.1993 IT MI932736
(43) Date de publication de la demande: 28.06.1995
(73) Titulaire: SOLVAY (Société Anonyme), B-1050 Bruxelles (BE)
(72) Inventeur: Nicolas, Edgard, B-1080 Bruxelles (BE); Botte, Luc, I-57012 Castiglioncello/Livorno (IT); Posar, Francesco, I-57013 Rosignano-Solvay/LI (IT); Bigini, Stefano, Terni (IT)
(74) Mandataire: Anthoine, Paul

(56) Documents cités:
- FR-A- 2 675 709
- GB-A- 845 544
- US-A- 4 284 492
- US-A- 4 592 817

## Description

L'invention concerne un procédé de fabrication d'hydroxyde de métal alcalin.

Elle concerne plus particulièrement un procédé de fabrication d'hydroxyde de métal alcalin, notamment d'hydroxyde de sodium, par électrodialyse d'une solution aqueuse d'halogénure de métal alcalin dans une cellule d'électrodialyse.

Dans le brevet US-A-4.592.817, on décrit un procédé de fabrication de solutions aqueuses d'hydroxyde de métal alcalin par électrodialyse de solutions aqueuses de chlorure de métal alcalin dans une cellule d'électrodialyse du type à trois compartiments définis respectivement entre une membrane anionique, une membrane cationique et une membrane bipolaire qui est interposée entre la membrane anionique et la membrane cationique. A cet effet, on introduit une solution aqueuse de chlorure de métal alcalin dans le compartiment salin de la cellule, délimité entre la membrane anionique et la membrane cationique et on recueille, d'une part, une solution aqueuse d'hydroxyde de métal alcalin du compartiment alcalin, délimité entre la membrane cationique et une face anionique de la membrane bipolaire et, d'autre part, une solution aqueuse d'acide chlorhydrique du compartiment acide, dèlimité entre la membrane anionique et une face cationique de la membrane bipolaire.

Dans ce procédé connu, la solution aqueuse d'hydroxyde de métal alcalin que l'on recueille de la cellule d'électrodialyse est diluée par l'eau d'hydratation des cations de métal alcalin qui traversent la membrane cationique. La concentration de la solution aqueuse d'hydroxyde de métal alcalin va dès lors dépendre de la concentration de la solution de chlorure de métal alcalin mise en oeuvre. Habituellement, on met en oeuvre des solutions sensiblement saturées de chlorure de métal alcalin. On observe toutefois, en pratique, que les solutions aqueuses d'hydroxyde de métal alcalin obtenues dans ce procédé connu ont une teneur en eau sensiblement supérieure à celle prévue en fonction de la concentration de la solution de chlorure de métal alcalin et des conditions de marche de la cellule d'électrodialyse, ce qui peut constituer un désavantage.

L'invention tend à remédier à ce désavantage du procédé connu décrit ci-dessus, en fournissant un procédé amélioré permettant d'obtenir des solutions aqueuses d'hydroxyde de métal alcalin plus concentrées.

L'invention concerne dès lors un procédé de fabrication d'hydroxyde de métal alcalin, selon lequel on met en oeuvre une cellule d'électrodialyse à trois compartiments, on fait circuler une solution aqueuse d'halogénure de métal alcalin dans un compartiment salin de la cellule, délimité entre une membrane anionique et une membrane cationique et on extrait une solution aqueuse d'hydroxyde de métal alcalin d'un compartiment alcalin de la cellule, délimité entre la membrane cationique et une face anionique d'une membrane bipolaire; selon l'invention, on introduit un halogénure de métal alcalin dans un compartiment acide de la cellule, qui est délimité entre la membrane anionique et une face cationique de la membrane bipolaire.

Dans le procédé selon l'invention, on entend désigner par membrane cationique une feuille mince, non poreuse, sélectivement perméable aux cations et imperméable aux anions. Les membranes cationiques utilisables dans le procédé selon l'invention doivent être en une matière inerte vis-à-vis des solutions aqueuses d'hydroxyde de sodium. Des membranes cationiques utilisables dans le procédé selon l'invention sont par exemple des feuilles en polymère fluoré contenant des groupements fonctionnels cationiques dérivés d'acides sulfoniques, d'acides carboxyliques ou d'acides phosphoniques ou des mélanges de tels groupements fonctionnels. Des membranes particulièrement adaptées à cette application de la cellule selon l'invention sont celles connues sous les noms NAFION^{R} (DU PONT) et FLEMION^{R} (ASAHI GLASS COMPANY Ltd.).

Une membrane anionique est une feuille mince, non poreuse, sélectivement perméable aux anions et imperméable aux cations. Des membranes anioniques utilisables dans le procédé selon l'invention sont des feuilles en un matériau polymérique inerte vis-à-vis des solutions aqueuses acides ou basiques et comprenant des groupements d'ammonium quaternaire ou du pyridinium, jouant le rôle de sites anioniques fixes.

Les membranes bipolaires sont des membranes qui présentent, sur une face, les propriétés d'une membrane cationique et, sur l'autre face, les propriétés d'une membrane anionique. Elles peuvent généralement être obtenues par accolement d'une membrane cationique et d'une membrane anionique en exploitant par exemple, à cet effet, la technique décrite dans la demande internationale de brevet WO 89/1059.

La cellule d'électrodialyse mise en oeuvre dans le procédé selon l'invention est divisée en trois compartiments par une membrane cationique, une membrane anionique et une membrane bipolaire. La membrane bipolaire est interposée entre la membrane cationique et la membrane anionique de telle sorte que sa face anionique soit orientée vers la membrane cationique et que sa face cationique soit orientée vers la membrane anionique. La cellule est disposée entre une anode et une cathode raccordées respectivement à la borne positive et à la borne négative d'une source de courant continu. La disposition de ces deux électrodes est telle que la membrane cationique soit dirigée vers l'anode et que la membrane anionique soit dirigée vers la cathode. En pratique, on associe plusieurs (au moins deux) cellules d'électrodialyse en série entre l'anode et la cathode, de manière à constituer un électrodialyseur industriel.

Par la suite, le compartiment délimité entre la membrane anionique et la membrane cationique sera désigné compartiment salin, le compartiment délimité entre la membrane cationique et la membrane bipolaire sera désigné compartiment alcalin et le compartiment délimité entre la membrane anionique et la membrane bipolaire sera désigné compartiment acide.

De manière connue en soi, on introduit une solution aqueuse d'halogénure de métal alcalin dans le compartiment salin de la cellule et on recueille une solution aqueuse d'hydroxyde de métal alcalin du compartiment alcalin.

Conformément à l'invention, on introduit un halogénure de métal alcalin dans le compartiment acide et on recueille de la sorte, de ce compartiment, une solution aqueuse d'acide halogénhydrique et d'halogénure de métal alcalin.

Par définition un acide halogénhydrique est un acide de formule générale HX, dans laquelle X désigne un halogène, par exemple le chlore.

Dans le procédé selon l'invention, l'halogénure ne paraît pas critique. On préfère sélectionner le chlorure.

L'halogénure de métal alcalin de la solution que l'on introduit dans le compartiment acide peut être identique ou différent de l'halogénure de métal alcalin de la solution du compartiment salin. On préfère, en pratique, utiliser le même halogénure de métal alcalin dans les deux compartiments.

La concentration de la solution aqueuse d'halogénure de métal alcalin que l'on introduit dans le compartiment salin n'est pas critique. On préfère toutefois, en pratique, mettre en oeuvre une solution sensiblement saturée à la température et à la pression règnant dans la cellule d'électrodialyse.

L'halogénure de métal alcalin peut être introduit dans le compartiment acide, sous toute forme compatible avec l'obtention d'une solution aqueuse dans ledit compartiment, par exemple à l'état solide anhydre, à l'état d'une suspension aqueuse ou à l'état d'une solution aqueuse. On préfère le mettre en oeuvre à l'état d'une solution aqueuse. Celle-ci peut être une solution sensiblement saturée ou une solution diluée. On peut utiliser de l'eau de mer.

Toutes autres choses restant égales par ailleurs, on observe que l'introduction d'halogénure de métal alcalin dans le compartiment acide a pour résultat d'augmenter la concentration de la solution d'hydroxyde de métal alcalin recueillie du compartiment alcalin. Bien que ne souhaitant pas être liés par une explication théorique, les inventeurs pensent que l'halogénure de métal alcalin introduit dans le compartiment acide a pour effet de réduire la diffusion osmotique d'eau à travers la membrane bipolaire, du compartiment acide vers le compartiment alcalin.

La quantité d'halogénure de métal alcalin que l'on introduit dans le compartiment acide va dès lors être imposée par la concentration recherchée pour la solution aqueuse d'hydroxyde de métal alcalin recueillie du compartiment alcalin. Elle va en outre dépendre de la concentration de la solution aqueuse d'halogénure de métal alcalin dans le compartiment alcalin, ainsi que des membranes utilisées. Les concentrations de 0,5 à 2 moles d'halogénure de métal alcalin par litre de solution dans le compartiment acide sont spécialement recommandées, notamment pour produire, dans le compartiment alcalin, des solutions aqueuses contenant sensiblement de 3 à 10 moles d'hydroxyde de métal alcalin par litre.

Dans le procédé selon l'invention, on recueille du compartiment salin, une solution aqueuse diluée d'halogénure de métal alcalin.

Dans une forme d'exécution avantageuse du procédé selon l'invention, l'halogénure de métal alcalin est introduit dans le compartiment acide à l'état d'une solution aqueuse diluée qui comprend une fraction au moins de la solution aqueuse diluée d'halogénure de métal alcalin que l'on soutire du compartiment salin. Cette forme d'exécution du procédé selon l'invention permet d'économiser de l'eau.

Dans le but réguler la concentration de la solution d'hydroxyde de métal alcalin recueillie du compartiment alcalin, ou la productivité de la cellule d'électrodialyse, on peut, conformément à une forme d'exécution particulière de l'invention, alimenter le compartiment alcalin avec de l'eau ou une solution aqueuse diluée d'hydroxyde de métal alcalin.

Le procédé selon l'invention trouve une application intéressante dans la production d'hydroxyde de sodium. Dans cette application de l'invention, la solution aqueuse d'halogénure de métal alcalin que l'on introduit dans le compartiment salin est une solution aqueuse d'halogénure de sodium (de préférence de chlorure de sodium). L'halogénure de métal alcalin que l'on introduit dans le compartiment acide est avantageusement de l'halogénure de sodium (de préférence du chlorure de sodium).

Le procédé selon l'invention présente l'avantage appréciable de permettre la fabrication, par électrodialyse, de solutions plus concentrées d'hydroxyde de métal alcalin, au départ de solutions d'halogénure de métal alcalin. Il présente l'avantage supplémentaire d'améliorer le rendement de courant de la membrane anionique, le rendement de courant de la membrane anionique étant, par définition, la fraction molaire de l'anion halogénure qui traverse effectivement la membrane sous l'action d'un Faraday.

Des particularités et détails de l'invention vont ressortir de la description suivante des dessins annexés.
La figure 1 représente schématiquement une installation d'électrodialyse pour la mise en oeuvre d'une forme de réalisation particulière du procédé selon l'invention;
La figure 2 est une variante de l'installation de la figure 1.

Dans ces figures, des mêmes notations de référence désignent des éléments identiques.

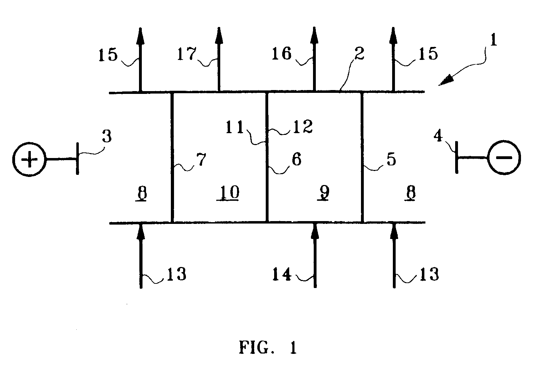

L'installation représentée à la figure 1 comprend un électrodialyseur constitué de plusieurs cellules d'électrodialyse élémentaires 1, associées en série, dans une enceinte 2, entre une anode 3 et une cathode 4 qui sont reliées respectivement à la borne positive et à la borne négative d'une source de courant continu. Pour une raison de simplicité, une seule cellule d'électrodialyse 1 est représentée à la figure.

La cellule d'électrodialyse 1 comprend successivement, entre la cathode 4 et l'anode 3, une membrane anionique 5, une membrane bipolaire 6 et une membrane cationique 7, délimitant respectivement un compartiment salin 8, un compartiment acide 9 et un compartiment alcalin 10. La membrane bipolaire 6 a sa face anionique 11 dirigée vers l'anode 3 et sa face cationique 12, dirigée vers la cathode 4.

Pendant l'exploitation de l'électrodialyseur de la figure 1 on introduit une solution aqueuse sensiblement saturée de chlorure de sodium 13 dans le compartiment salin 8 de la cellule, on introduit une solution aqueuse diluée de chlorure de sodium 14 dans le compartiment acide 9 et on soutire respectivement une solution diluée de chlorure de sodium 15 du compartiment salin 8, une solution aqueuse acide de chlorure de sodium 16 du compartiment acide 9 et une solution aqueuse d'hydroxyde de sodium 17 du compartiment alcalin 10. Sous l'effet du champs électrique généré par les électrodes 3 et 4, il y a dissociation d'eau sur la membrane bipolaire 6, donnant lieu à la formation de protons dans le compartiment acide 9 et de cations hydroxyle dans le compartiment alcalin 10. Simultanément, des cations sodium migrent du compartiment salin 8 vers le compartiment alcalin 10 et des anions chlorure migrent du compartiment salin 8 vers le compartiment acide 9. De l'eau diffuse par ailleurs vers le compartiment alcalin 10, d'une part avec les cations sodium à travers la membrane cationique 7 et, d'autre part, par osmose à travers la membrane bipolaire 6. Il en résulte une dilution de la solution d'hydroxyde de sodium dans le compartiment alcalin 10. La solution de chlorure de sodium 14 a pour fonction de réduire la teneur en eau dans la solution d'hydroxyde de sodium 17, toutes autres choses restant égales par ailleurs.

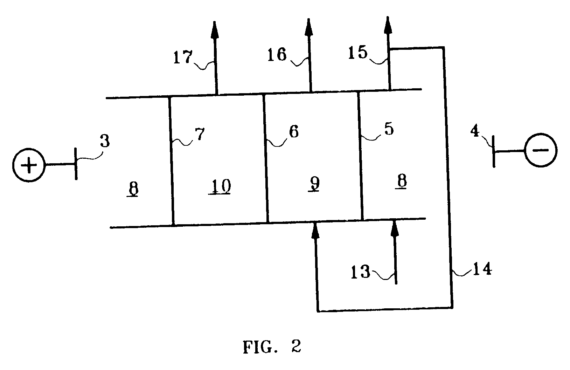

Dans une forme de réalisation particulière du procédé selon l'invention, schématisée à la figure 2, on prélève une fraction de la solution aqueuse diluée de chlorure de sodium 15 recueillie du compartiment salin 8 et on l'introduit dans le compartiment acide 9 où elle constitue la solution diluée 14 précitée.

Les exemples suivants servent à illustrer l'invention.

Dans ces exemples on a mis en oeuvre une cellule d'électrodialyse du type de celle schématisée à la figure 1. La cellule a été équipée d'une membrane anionique SELEMION^{R} (ASAHI GLASS), d'une membrane cationique NAFION (série 900) et d'une membrane bipolaire obtenue par l'assemblage d'une membrane anionique RAIPORE R-1030 (Pall Rai) et d'une membrane cationique RAIPORE R-4010 (Pall Rai).

On a alimenté le compartiment salin avec une solution aqueuse saturée de chlorure de sodium et on a procédé à l'électrodialyse sous une densité de courant de 1,5 kA/m² de membrane bipolaire. La température de travail dans la cellule a été maintenue à environ 50 °C.

On a mesuré la concentration de la solution d'hydroxyde de sodium produite dans le compartiment alcalin et le rendement de courant de la membrane anionique.

### Exemple 1 (conforme à l'invention)

Dans cet exemple, on a alimenté le compartiment acide avec une solution aqueuse de chlorure de sodium, de manière à maintenir dans le compartiment acide une concentration sensiblement égale à 1,3 mole de NaCl par litre de solution.

Après 35 jours de marche, on a relevé les résultats suivants :
Concentration de la solution d'hydroxyde de sodium recueillie du compartiment alcalin : 250 g/kg
Rendement de courant de la membrane anionique : 86,4 %

### Exemple 2 (conforme à l'invention)

On a répété l'essai de l'exemple 1 à la différence que l'on a maintenu dans le compartiment acide, une concentration sensiblement égale à 0,6 mole de NaCl par litre de solution.

Après 28 jours de fonctionnement, on a relevé les résultats suivants :
Concentration de la solution d'hydroxyde de sodium recueillie du compartiment alcalin : 220 g/kg
Rendement de courant de la membrane anionique : 86 %

### Exemple 3 (de référence)

On a répété toutes les conditions de l'essai de l'exemple 1, à la seule exception que l'on a omis d'introduire la solution de chlorure de sodium dans le compartiment acide de la cellule d'électrodialyse.

Après 35 jours de fonctionnement, on a relevé les résultats suivants :
Concentration de la solution d'hydroxyde de sodium recueillie du compartiment alcalin : 190 g/kg
Rendement de courant de la membrane anionique : 85,0 %

Une comparaison des résultats des exemples 1 et 2 (conformes à l'invention) avec ceux de l'exemple 3 (de référence) montre le progrès apporté par l'invention en ce qui concerne la concentration de la solution aqueuse d'hydroxyde de sodium produite et le rendement de courant.

## Revendications

1. Procédé de fabrication d'une solution aqueuse d'hydroxyde de métal alcalin contenant de 3 à 10 moles d'hydroxyde de métal alcalin par litre, selon lequel on met en oeuvre une cellule d'électrodialyse à trois compartiments, on fait circuler une solution aqueuse d'halogénure de métal alcalin dans un compartiment salin de la cellule, délimité entre une membrane anionique et une membrane cationique, on introduit un halogénure de métal alcalin dans un compartiment acide de la cellule, qui est délimité entre la membrane anionique et une face cationique de la membrane bipolaire, et on extrait la solution aqueuse d'hydroxyde de métal alcalin d'un compartiment alcalin de la cellule, délimité entre la membrane cationique et une face anionique de la membrane bipolaire, caractérisé en ce que l'on règle l'introduction de l'halogénure de métal alcalin dans le compartiment acide pour obtenir dans celui-ci une solution aqueuse d'acide halogénhydrique contenant de 0,5 à 2 moles d'halogénure de métal alcalin par litre.

2. Procédé selon la revendication 1, caractérisé en ce que la solution aqueuse d'halogénure de métal alcalin du compartiment salin est sensiblement saturée en halogénure de métal alcalin.

3. Procédé selon la revendication 1 ou 2, caractérisé en ce que l'halogénure de métal alcalin est introduit dans le compartiment acide à l'état d'une solution aqueuse.

4. Procédé selon l'une quelconque des revendications 1 à 3, caractérisé en ce que l'halogénure de métal alcalin que l'on introduit dans le compartiment acide est identique à l'halogénure de métal alcalin de la solution introduite dans le compartiment salin.

5. Procédé selon l'une quelconque des revendications 3 à 5, caractérisé en ce que la solution aqueuse d'halogénure de métal alcalin que l'on introduit dans le compartiment acide comprend une fraction au moins d'une solution aqueuse diluée d'halogénure de métal alcalin que l'on soutire du compartiment salin.

6. Procédé selon l'une quelconque des revendications 3 à 6, caractérisé en ce que la solution aqueuse d'halogénure de métal alcalin que l'on introduit dans le compartiment acide comprend de l'eau de mer.

7. Procédé selon l'une quelconque des revendications 1 à 7, caractérisé en ce que la solution aqueuse d'halogénure de métal alcalin que l'on introduit dans le compartiment salin est une solution aqueuse de chlorure de sodium, et en ce que l'halogénure de métal alcalin que l'on introduit dans le compartiment acide comprend du chlorure de sodium.

## Claims

1. Process for the manufacture of an aqueous alkali metal hydroxide solution containing from 3 to 10 moles of alkali metal hydroxide per litre, according to which an electrodialysis cell containing three compartments is used, an aqueous alkali metal halide solution is circulated in a saline compartment of the cell, delimited between an anionic membrane and a cationic membrane, an alkali metal halide is introduced into an acidic compartment of the cell, which is delimited between the anionic membrane and a cationic face of the bipolar membrane, and the aqueous alkali metal hydroxide solution is extracted from an alkaline compartment of the cell, delimited between the cationic membrane and an anionic face of a bipolar membrane, characterized in that the introduction of the alkali metal halide into the acidic compartment is adjusted in order to obtain in the latter an aqueous hydrohalic acid solution containing from 0.5 to 2 moles of alkali metal halide per litre.

2. Process according to Claim 1, characterized in that the aqueous alkali metal halide solution of the saline compartment is substantially saturated with alkali metal halide.

3. Process according to Claim 1 or 2, characterized in that the alkali metal halide is introduced into the acidic compartment in the state of an aqueous solution.

4. Process according to any one of Claims 1 to 3, characterized in that the alkali metal halide which is introduced into the acidic compartment is identical to the alkali metal halide of the solution introduced into the saline compartment.

5. Process according to any one of Claims 3 to 4, characterized in that the aqueous alkali metal halide solution which is introduced into the acidic compartment comprises at least a fraction of a dilute aqueous alkali metal halide solution which is withdrawn from the saline compartment.

6. Process according to any one of Claims 3 to 5, characterized in that the aqueous alkali metal halide solution which is introduced into the acidic compartment comprises seawater.

7. Process according to any one of Claims 1 to 6, characterized in that the aqueous alkali metal halide solution which is introduced into the saline compartment is an aqueous sodium chloride solution, and in that the alkali metal halide which is introduced into the acidic compartment comprises sodium chloride.

## Patentansprüche

1. Verfahren zur Herstellung einer wäßrigen Alkalimetallhydroxidlösung, enthaltend 3 bis 10 Mol Alkalimetallhydroxid pro Liter, gemäß dem man eine Elektrodialysezelle mit drei Räumen gebraucht, man eine wäßrige Alkalimetallhalogenidlösung in einem Salzraum der Zelle zirkulieren läßt, der zwischen einer anionischen Membran und einer kationischen Membran begrenzt ist, man ein Alkalimetallhalogenid in einen sauren Raum der Zelle zuführt, der zwischen der anionischen Membran und einer kationischen Seite der bipolaren Membran begrenzt ist, und man die wäßrige Alkalimetallhydroxidlösung einem alkalischen Raum der Zelle entnimmt, der zwischen der kationischen Membran und einer anionischen Seite der bipolaren Membran begrenzt ist, dadurch gekennzeichnet, daß man die Zufuhr des Alkalimetallhalogenids in den sauren Raum regelt, um in diesem eine wäßrige Halogenwasserstoffsäurelösung zu erhalten, die 0,5 bis 2 Mol Alkalimetallhalogenid pro Liter enthält.

2. Verfahren nach Anspruch 1, dadurch gekennzeichnet, daß die wäßrige Alkalimetallhalogenidlösung des Salzraums weitgehend an Alkalimetallhalogenid gesättigt ist.

3. Verfahren nach Anspruch 1 oder 2, dadurch gekennzeichnet, daß das Alkalimetallhalogenid in den sauren Raum im Zustand einer wäßrigen Lösung zugeführt wird.

4. Verfahren nach einem der Ansprüche 1-3, dadurch gekennzeichnet, daß das Alkalimetallhalogenid, das man in den sauren Raum zuführt, identisch ist zu dem Alkalimetallhalogenid der Lösung, die in den Salzraum zugeführt wird.

5. Verfahren nach einem der Ansprüche 3-4, dadurch gekennzeichnet, daß die wäßrige Alkalimetallhalogenidlösung, die man in den sauren Raum zuführt, einen Anteil von mindestens einer verdünnten wäßrigen Alkalimetallhalogenidlösung umfaßt, die man dem Salzraum entnimmt.

6. Verfahren nach einem der Ansprüche 3-5, dadurch gekennzeichnet, daß die wäßrige Alkalimetallhalogenidlösung, die man in den sauren Raum zuführt, Seewasser umfaßt.

7. Verfahren nach einem der Ansprüche 1-6, dadurch gekennzeichnet, daß die wäßrige Alkalimetallhalogenidlösung, die man in den Salzraum zuführt, eine wäßrige Natriumchloridlösung ist und daß das Alkalimetallhalogenid, das man in den sauren Raum zuführt, Natriumchlorid umfaßt.
